Europäisches Patentamt

European Patent Office

Office européen des brevets

(11) Publication number: **0 041 811**

**B1**

(12) **EUROPEAN PATENT SPECIFICATION**

(45) Date of publication of patent specification: **22.08.84**

(21) Application number: **81302419.7**

(22) Date of filing: **02.06.81**

(51) Int. Cl.³: **B 60 T 13/24**

(54) **Improvements relating to servomotor casings.**

(30) Priority: **05.06.80 GB 8018542**

(43) Date of publication of application:
**16.12.81 Bulletin 81/50**

(45) Publication of the grant of the patent:
**22.08.84 Bulletin 84/34**

(84) Designated Contracting States:
**DE FR GB IT**

(56) References cited:
**US-A-2 438 723**
**US-A-2 587 404**
**US-A-3 656 413**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Hodkinson, Harold**
**54 St. Martins Road**
**Finham Coventry (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to casings for fluid pressure servomotors and will be described with reference to vacuum suspended brake boosters for the wheel brakes of motor vehicles. Such boosters act to reduce the vehicle driver braking effort required to generate a given braking effect.

Vacuum suspended brake boosters usually comprise two annular dished pressings flanged together at their outer rims to form a hollow casing. The booster is divided into two chambers by an annular diaphragm and contains valve means arranged to control a differential pressure across the diaphragm so as to provide a proportionate increase in output load from the booster for a given input load. The load transmitted by the booster is reacted through the casing to a part of the vehicle structure. The operation of such boosters is well known and will not be further described here.

One problem with booster casings is that they must be sufficiently rigid to prevent undue flexing during transmission of reaction loads. A second, interrelated, problem is that the booster casings must have an acceptable fatigue life. Whilst the attachment points of the booster to the vehicle structure can be placed at a sufficient radius to minimise the bending moment on the casing, the attachment points to the master cylinder are determined by the cylinder flange size and the bending moment is usually much greater. It is not desirable to increase the cylinder flange size since this would increase the weight of the assembly and lead to machining difficulties due to the larger overall diameter of the cylinder. Furthermore, such a change would be a departure from current industry standards and could reduce commonality between master cylinders for servo and non-servo applications.

It is known to stiffen the booster casing by ribbing the pressing but this can increase the size of the booster in critical installational areas at a time when auto manufacturers are seeking to reduce material weight and component size. It is difficult to achieve an acceptable fatigue strength in the base of a deep pressing, and ribbing compounds this difficulty since additional pressing operations are needed to produce the ribbed casing.

The present invention provides an improved booster casing which is lighter than prior art casings and yet has sufficient ridigity to transmit booster reaction loads whilst retaining a good fatigue strength. The casing does not take up greater space than existing designs and is cheaper to manufacture.

In accordance with the present invention a fluid pressure servomotor of the kind having a principal axis, two end walls extending transversely of the axis, and an outer wall joining the two end walls, first mounting means for mounting the casing by one end wall to a vehicle structure, second mounting means for mounting to the other end wall at a position inward from the outer edge of the wall a member which in use transmits reaction loads to the casing and means for stiffening said other end wall, is characterised in that the stiffening means comprises a stiffening plate extending from the second mounting means to the outer wall such as to form with said other end wall an annular box section structure.

Preferably the radial wall has an internal contour conforming substantially to the configuration of the diaphragm on the respective stroke which approaches closely the radial wall.

Other features of the invention are included in the following description of a preferred embodiment shown, by way of example only, on the accompanying drawings in which:—

Fig. 1 is a part sectional view through a vacuum suspended brake booster incorporating the invention;

Fig. 2 is a transverse section through a stiffening plate according to the invention; and

Fig. 3 is a view of the plate of Fig. 2 in the direction of arrow 'A'.

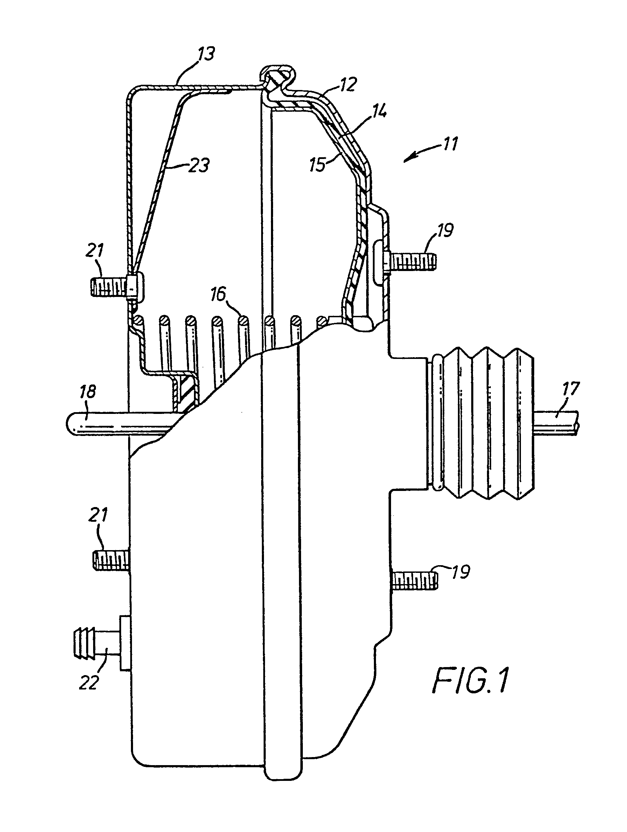

With reference to Fig. 1 there is shown a conventional vacuum suspended brake booster 11 comprising two dished annular pressings 12, 13 flanged together to form a hollow casing. The casing thus has a principal axis, two end walls extending transversely of the axis and an outer wall joining the two end walls. The usual flexible diaphragm 14 dividing the casing into two chambers is supported by a diaphragm plate 15. Coil spring 16 urges the plate 15 and diaphragm 14 against the casing pressing 12.

An input rod 17 from a driver's brake pedal (not shown) and an output rod 18 to a hydraulic master cylinder (not shown) are provided. Studs 19 and 21 respectively form mounting means for attachment to the vehicle bulkhead and to the master cylinder. Pipe fitting 22 is for connection to a vacuum source, usually the vehicle inlet manifold.

In use the master cylinder constitutes a member which in use transmits reaction loads to the casing through studs 21 and then through the booster casing to bulkhead mounting studs 19. The wall thickness of the casing must be sufficient to prevent flexing under load, particularly over the radial portion. Since the casing is subjected to repeated loadings it must also have an acceptable fatigue life.

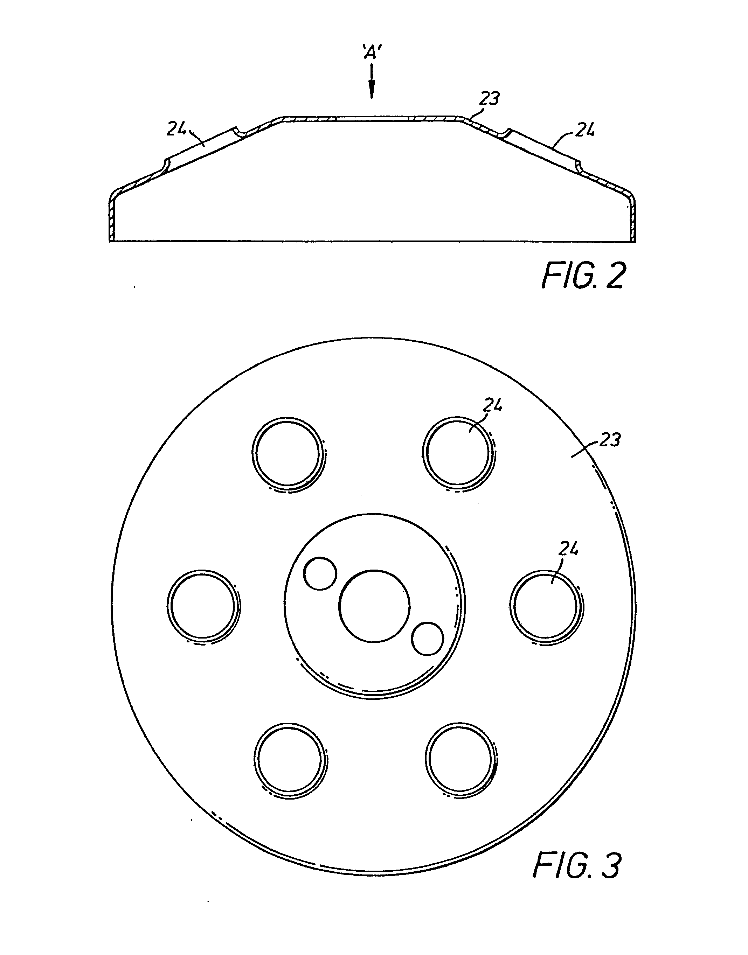

A stiffening plate 23 is provided in the casing to box the radial portion of the casing wall. The stiffening plate extends from the master cylinder mounting studs 21 to the outer wall in such a way as to form with the end wall an annular box section structure. The plate 23 may be attached by any convenient method, for example adhesives, spot welding or electron beam welding. Such a box section is inherently very rigid whilst enabling the material thickness to be reduced to approximately half the gauge previously required. Moreover, and with reference to Figs. 2 and 3, the plate 23 may be apertured to increase stiffness and to reduce weight.

The box section construction enables the casing pressings to be of simple section so reducing cost of manufacture and resulting in a good fatigue life. The stiffening plate 23 may be internal or external of the booster.

The invention is not limited to vacuum suspended boosters but is equally applicable to air suspended and compressed air suspended boosters of a similar construction. Whilst Fig. 1 depicts a direct acting booster it will be clear that the invention is applicable to remote boosters.

**Claims**

1. A fluid pressure diaphragm servomotor casing having a principal axis, two end walls extending transversely of the axis, and an outer wall joining the two end walls, first mounting means (19) for mounting the casing by one end wall to a vehicle structure, second mounting means (21) for mounting to the other end wall at a position inward from the outer edge of the wall a member which in use transmits reaction loads to the casing and means for stiffening said other end wall, characterised in that the stiffening means comprises a stiffening plate (23) extending from the second mounting means (21) to the outer wall such as to form with said other end wall an annular box section structure.

2. A casing according to Claim 1, characterised in that said other wall together with its stiffening plate has an internal contour conforming substantially to the configuration of the diaphragm (14) on the respective stroke which closely approaches said other radial wall.

3. A casing according to Claim 1 or Claim 2, characterised in that the stiffening plate (23) has at least one aperture (24) therein.

**Patentansprüche**

1. Ein Gehäuse für einen mit Druckmittel betriebenen Membranservomotor, mit einer Hauptachse, zwei Endwänden, die sich quer zu der Achse erstrecken, und einer äußeren Wand, die die beiden Endwände miteinander verbindet, ersten Befestigungsmitteln (19) zum Befestigen des Gehäuses durch eine Endwand an einem Fahrzeugbauteil, zweiten Befestigungsmitteln (21) zum Befestigen an der anderen Endwand an einer Stelle innerhalb der äußeren Kante der Wand ein Teil, das in Betrieb Reaktionskräfte auf das Gehäuse überträgt, und Mitteln zum Versteifen der anderen Endwand, gekennzeichnet, dadurch, daß die Versteifungsmittel eine Versteifungsplatte (23) umfassen, die sich von den zweiten Befestigungsmitteln (21) zu der äußeren Wand hin erstreckt, derart, daß sie mit der anderen Endwand ein ringförmiges Bauteil mit Kastenquerschnitt bildet.

2. Ein Gehäuse gemäß Anspruch 1, gekennzeichnet dadurch, daß die andere Wand zusammen mit ihrer Versteifungsplatte eine innere Kontur hat, die mit der Form der Membran (14) bei dem jeweiligen Hub, der sich stark an die andere Radialwand annähert, im wesentlichen übereinstimmt.

3. Ein Gehäuse gemäß Anspruch 1 oder Anspruch 2, gekennzeichnet dadurch, daß die Versteifungsplatte (23) mindestens eine Öffnung (24) darin hat.

**Revendications**

1. Carter de servomoteur à diaphragme actionné par une pression de fluide comportant un axe principal, deux parois d'extrémité s'étendant transversalement à l'axe et une paroi extérieure joignant entre elles les deux parois d'extrémité, des premiers moyens de montage (19) pour monter le carter, au moyen d'une première paroi d'extrémité, sur une structure du véhicule, des seconds moyens de montage (21) pour monter, sur l'autre paroi d'extrémité, en un emplacement situé à l'intérieur du bord extérieur de la paroi, un organe qui, en service, transmet les charges de réaction au carter et des moyens pour raidir ladite autre paroi d'extrémité, caractérisé en ce que les moyens raidisseurs comprennent une plaque de raidissement (23) qui s'étend à partir des seconds moyens de montage (21) jusqu'à la paroi extérieure de façon à former avec ladite autre paroi d'extrémité une structure annulaire en forme de caisson.

2. Carter selon la revendication 1, caractérisé en ce que ladite autre paroi, en combinaison avec sa plaque de raidissement, a un contour interne qui s'adapte à peu près à la configuration que prend le diaphragme (14) lors de la course respective au cours de laquelle il s'approche étroitement de ladite autre paroi radiale.

3. Carter selon l'une des revendications 1 et 2, caractérisé en ce que la plaque de raidissement (23) est percée d'au moins une ouverture (24).

FIG.1

'A'

24          23

24

*FIG. 2*

24

23

24

24

*FIG. 3*